# EUROPÄISCHE PATENTSCHRIFT

(11) **EP 3 152 823 B1**
(45) Veröffentlichungstag und Bekanntmachung des Hinweises auf die Patenterteilung: **04.12.2019**
(21) Anmeldenummer: 15718480.5
(22) Anmeldetag: 23.04.2015
(51) Int. Cl.: H02M 3/00

(54) **SCHALTUNGSANORDNUNG ZUM WANDELN VON SPANNUNGEN**
CIRCUIT ARRANGEMENT FOR VOLTAGE CONVERSION
CIRCUIT POUR LA CONVERSION DES TENSIONS

(30) Priorität: 05.06.2014 DE 102014210797
(43) Veröffentlichungstag der Anmeldung: 12.04.2017
(73) Patentinhaber: OSRAM GmbH, 80807 München (DE)
(72) Erfinder: POLLISCHANSKY, Thomas, 81371 München (DE); SCHMITT, Harald, 80689 München (DE)
(86) Internationale Anmeldenummer: PCT/EP2015/058865
(87) Internationale Veröffentlichungsnummer: WO 2015/185268

(56) Entgegenhaltungen:
- EP-A1- 1 422 814
- US-A- 4 635 176
- US-A1- 2004 004 849
- US-A1- 2012 120 697

## Beschreibung

### Technisches Gebiet

Die Erfindung geht aus von einer Schaltungsanordnung zum Wandeln von Spannungen, aufweisend einen Gleichspannungswandler mit einem im aktiven Wandlerstrompfad befindlichem Wandlerkondensator nach der Gattung des Hauptanspruchs.

### Hintergrund

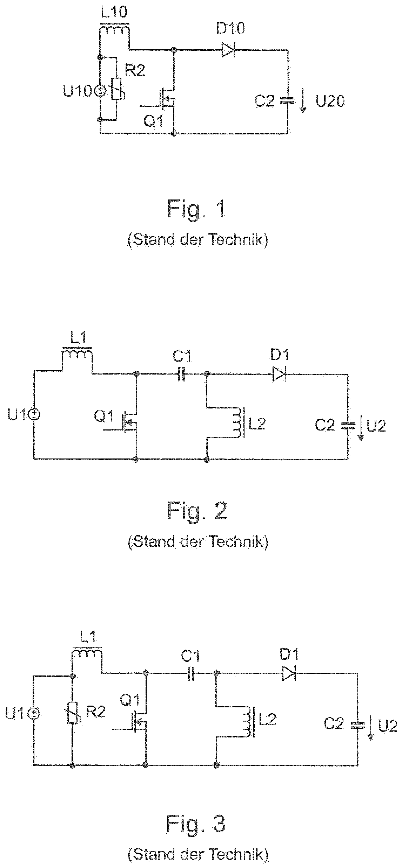

An Netzspannung verwendete Gleichspannungswandler müssen üblicherweise eine gewisse Spannungsfestigkeit aufweisen, damit sie für den Netzbetrieb zugelassen werden. Diese Spannungsfestigkeit wird im Rahmen verschiedener Normen wie z.B. der DIN VDE 100 gefordert. Bei bekannten Gleichspannungswandlern kommt normalerweise ein Varistor am Netzeingang zum Einsatz, der eventuell auftretende Überspannungspulse ableitet oder zumindest vermindert. Bei üblicherweise verwendeten Schaltungsanordnungen wie z.B. einem in Fig. 1 gezeigten Aufwärtswandler ergibt sich ein erfreulicher zusätzlicher Effekt: Da im Strompfad zwischen dem Eingang U10 und einem verwendeten Speicherkondensator C2 nur eine Diode D10, die auch als Wandlerdiode bezeichnet wird, angeordnet ist, wird ein Teil des Überspannungspulses über die Diode D10 in den Speicherkondensator C2 abgeleitet. Hierbei ist nur die Leitfähigkeit und Schaltgeschwindigkeit der verwendeten Wandlerdiode D10 und die Impendanz der Induktivität L10 maßgebend, so dass ein am Eingang installierter Varistor einen eingehenden Überspannungspuls nur so lange ableiten muss, bis die Wandlerdiode D10 leitend wird.

Wird jedoch ein SEPIC Wandler oder ein CUK-Wandler verwendet, so ergibt sich das Problem, dass beide Wandlertopologien im Strompfad zwischen dem Eingang und einem Speicherkondensator einen Gleichspannungsisolierenden Wandlerkondensator aufweisen, so dass ein einlaufender Überspannungspuls nicht in den Speicherkondensator abgeleitet werden kann.

Als SEPIC-Wandler (single ended primary inductance converter) wird im Folgenden die 1977 von Massey und Snyder vorgestellte Wandlertopologie mit drei Energiespeichern (Zwei Spulen und ein Kondensator) angesehen. Details zu dieser Topologie sind z.B. im einschlägigen Wikipedia Artikel (http://de.wikipedia.org/wiki/SEPIC) zu finden.

Als CUK-Wandler wird im Folgenden die 1976 von Slobodan Cuk vorgestellte Wandlertopologie angesehen. Auch ein CUK-Wandler weist drei aktive Energiespeicher (ebenfalls zwei Spulen und einen Kondensator) auf. Details zu dieser Topologie sind z.B. im einschlägigen Wikipedia Artikel (http://de.wikipedia.org/wiki/%C4%86uk-Wandler) zu finden.

Fig. 2 zeigt beispielhaft die Grundschaltung eines SEPIC Wandlers. C2 ist der ausgangsseitige Speicherkondensator des Wandlers, C1 stellt den so genannten Wandlerkondensator dar, welcher an Stelle der dort bei den bekannten Wandlerschaltungen wie dem Hochsetzsteller ansässigen Diode eingesetzt wird. Der Wandlerkondensator ist dabei in den aktiven Wandlerstrompfad des Wandlers geschaltet. Im Gegensatz zum Hochsetzsteller lassen sich mit dem SEPIC Ausgangspannungen U2 erzeugen die sowohl kleiner als auch grösser als die Eingangsspannung U1 sind.

Als aktiver Wandlerstrompfad wird im Folgenden der Strompfad angesehen, über den von dem Gleichspannungswandler die Wandlerleistung umgesetzt wird. Am Beispiel der Schaltung aus Fig. 2 soll dies erläutert werden: In dieser Grundschaltung sind die erste Drossel L1, der Wandlertransistor Q1, der Wandlerkondensator C1, die zweite Drossel L2 und die Wandlerausgangsdiode D1 im aktiven Wandlerstrompfad. In diesen Strompfaden fließt ein Teil oder die gesamte Leistung, die im Gleichspannungswandler umgesetzt wird. Drossel L1 und L2 können entweder zwei unabhängige Induktivitäten sein, oder auf einem Kern integriert werden.

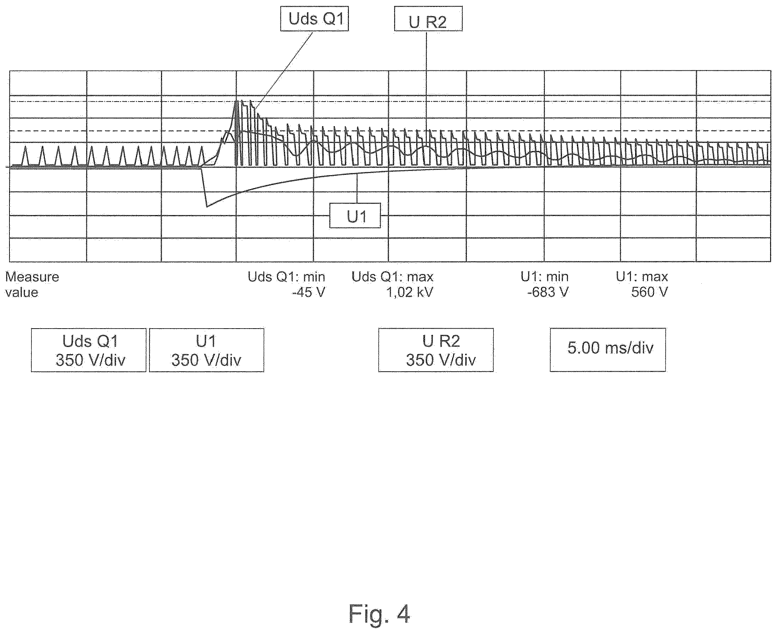

Läuft nun ein Überspannungspuls am Eingang ein, so kann dieser aufgrund seines unipolaren Charakters nicht über den Kondensator C1 und die Diode D1 abfließen, so dass sich am Wandlertransistor Q1 eine hohe Spannung aufbaut. Aus dem Stand der Technik ist eine Beschaltung mit einem Varistor gemäß Figur 3 bekannt. Jedoch muss der Varistor nun so ausgelegt sein, den gesamten Überspannungspuls ableiten und in Wärme umwandeln zu können. Dies erfordert ein großes Bauteil mit viel Volumen, welches entsprechend teuer und sperrig ist. Oftmals hilft aber auch diese Maßnahme nicht, da es durch das hohe dU/dt eines Überspannungspulses innerhalb der Schaltung zu Überschwingen der Spannung zwischen L1 und C1 kommen kann, wodurch Q1 zerstört werden kann. Hinzu kommt, dass sowohl bei SEPIC als auch bei CUK-Wandlern die Wandlerdiode D1 immer mit der gleichen Spannung beaufschlagt wird wie der Wandlertransistor Q1. Es ist also nicht nur Q1 in Gefahr, sondern auch die Wandlerdiode D1. Fig. 4 zeigt ein Oszillogramm dazu. Ein Überspannungspuls am Eingang U1 von z.B. 683V an U1 wird durch R2 auf 560V begrenzt. Die Spannung an Q1 schwingt aber auf 1,02kV auf. Dieses Überschwingen lässt sich durch den eingangsseitigen Varistor R2 nicht verhindern.

Einen anderen Weg den Schalttransistor zu schützen geht EP 1 526 622 B1. Hier werden mittels einer Schaltung Transienten erfasst, und der Schalttransistor durch Abschalten vor zu hohen Strömen geschützt. Einen Schutz gegen Überspannung bietet aber auch die EP 1 526 622 B1 nicht.

### Aufgabe

Es ist Aufgabe der Erfindung, eine Schaltungsanordnung zum Wandeln von Spannungen mit einem Gleichspannungswandler und einem im aktiven Wandlerstrompfad befindlichen Wandlerkondensator anzugeben, die obige Nachteile nicht aufweist.

### Darstellung der Erfindung

Die Lösung der Aufgabe erfolgt erfindungsgemäß mit einer Schaltungsanordnung gemäß Anspruch 1.

Diese Maßnahme nutzt in Vorteilhafter Weise die Tatsache, dass das spannungsabhängige Element bei ein hohes Potential über dem Wandlerkondensator ableiten kann, so dass der Transistor des Gleichspannungswandlers geschützt wird. Das Potential wird hierbei vorzugsweise in einen parallel zum Ausgang des Gleichspannungswandlers geschalteten Speicherkondensator abgeleitet.

Als spannungsabhängiges Element wird im Folgenden jedes Element angesehen, welches einen Wert aufweist, der sich in Abhängigkeit von der am Element anliegenden Spannung ändert. Solche Elemente sind z.B. Varistoren, Funkenstrecken oder TVS-Dioden.

Erfindungsgemäß ist der Gleichspannungswandler ein SEPIC-Wandler. Dies hat den Vorteil, dass der Gleichspannungswandler sehr variabel zu regeln ist und die Ausgangsspannung in einem weiten Bereich einstellbar ist.

Erfindungsgemäß kann der Gleichspannungswandler auch ein Cuk-Wandler anstatt dem SEPIC-Wandler sein. Cuk-Wandler haben den Vorteil bei entsprechender Regelung als Stromquelle dienen zu können, so dass ein teurer und voluminöser Speicherkondensator entfallen kann. Ein eventuell auftretendes hohes Potential wird dann von dem spannungsabhängigen Element vorteilhaft auf Masse abgeleitet.

In einer weiteren Ausführungsform ist das spannungsabhängige Element ein Varistor. Varistoren sind kostengünstig und können hohe Ströme ableiten.

In einer weiteren Ausführungsform ist das spannungsabhängige Element eine TVS-Diode. TVS-Dioden schalten schnell, so dass auch schnelle Potentialänderungen nicht zu Schaden führen.

In einer weiteren Ausführungsform ist dass das spannungsabhängige Element eine Funkenstrecke. Funkenstrecken haben beim Durchbruch einen niedrigen Innenwiderstand und schalten extrem schnell. Somit kann die Schaltungsanordnung besonders gut vor hohen und schnell auftretenden Potentialen wie Spannungsspitzen geschützt werden.

In einer weiteren Ausführungsform ist in den Gleichspannungswandler eine Eingangsspannung eingebbar, und der Gleichspannungswandler ist eingerichtet, eine Ausgangsspannung auszugeben, wobei die Ausgangsspannung kleiner ist als die Eingangsspannung. Durch diese Maßnahme kann die Schaltungsanordnung variabel geregelt werden und ist für viele Einsatzzwecke geeignet.

Weitere vorteilhafte Weiterbildungen und Ausgestaltungen der erfindungsgemäßen Schaltungsanordnung zum Wandeln von Spannungen ergeben sich aus weiteren abhängigen Ansprüchen und aus der folgenden Beschreibung.

### Kurze Beschreibung der Zeichnungen

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig.1: Eine bekannte Standardschaltung eines Aufwärts-wandlers,
- Fig. 2: eine bekannte Standardschaltung eines SEPIC Wand-lers,
- Fig. 3: die bekannte Standardschaltung des SEPIC Wandlers mit einem Varistor am Eingang zum Schutz gegen Überspannungsimpulse,
- Fig. 4: ein Oszillogramm eines Überspannungspulses am Eingang U1 bei der Schaltung gemäß Fig. 3,
- Fig. 5: eine erfindungsgemäße Ausführungsform der Schaltungsanordnung mit einem dem Wandlerkondensator parallel geschalteten Varistor,
- Fig. 6: ein Oszillogramm eines Überspannungspulses am Eingang U1 bei der erfindungsgemäßen Schaltung gemäß Fig. 5,
- Fig. 7: ein Oszillogramm des Stromes durch den Varistor R1 bei dem Überspannungspuls am Eingang U1 bei der erfindungsgemäßen Schaltung gemäß Fig. 5,
- Fig. 8: ein Ausführungsbeispiel des erfindungsgemäßen Gleichspannungswandlers als elektronisches Vorschaltgerät für LEDs mit einer TVS-Diode anstatt dem Varistor,
- Fig. 9: ein Ausführungsbeispiel des erfindungsgemäßen Gleichspannungswandlers als Cuk-Wandler mit zum Wandlerkondensator parallelgeschaltetem Varistor.

### Bevorzugte Ausführung der Erfindung

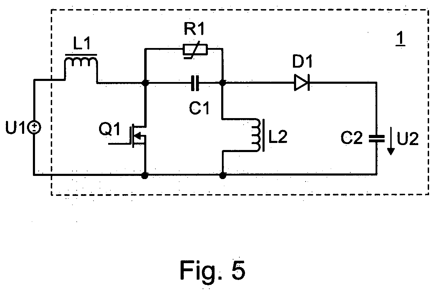

**Fig. 5** zeigt eine erste erfindungsgemäße Ausführungsform der Schaltungsanordnung mit einem dem Wandlerkondensator parallel geschalteten Varistor. Diese neue Anordnung eines Varistors zum Schutz des Wandlertransistors gegen Überspannung hat gegenüber der bekannten Verschaltung am Eingang des Wandlers gemäß **Fig. 3** mehrere Vorteile.

Wie oben schon erläutert baut sich am Knotenpunkt zwischen Wandlerkondensator C1 und Wandlertransistor Q1 eine hohe Spannung auf. Es liegt also eine hohe Spannung über dem Wandlerkondensator C1 an. Der erfindungsgemäße parallel geschaltete Varistor R1 wird somit ab einer gewissen Spannung leitend und leitet den Überspannungspuls über die Diode D1 in einen Speicherkondensator C2 ab. Dabei geht der Großteil der Energie in den Speicherkondensator C2, wodurch der Varistor C1 klein und kostengünstig ausfallen kann, da er nicht mehr so viel Energie aufnehmen muss wie bei der aus dem Stand der Technik bekannten Lösung.

Die Position des Varistors R1 parallel zu C1 ist günstig, da hier die Kapazität des Varistors das Schaltverhalten des Wandlerschalters Q1 nicht stört. Die Kapazität des Varistors ist ca. nur ein Hundertstel der des Wandlerkondensators C1. An C1 liegen keine hochfrequenten Spannungen an. Somit führt der erfindungsgemäß verschaltete Varistor dazu, dass sich ein SEPIC- oder ein Cuk-Wandler bezüglich eines eingehenden Überspannungspulses ähnlich verhält wie ein Aufwärtswandler, da die Energie des Überspannungspulses in Speicherbauteile abgeleitet werden kann, wo sie dann für den Wandlungsprozess genutzt wird.

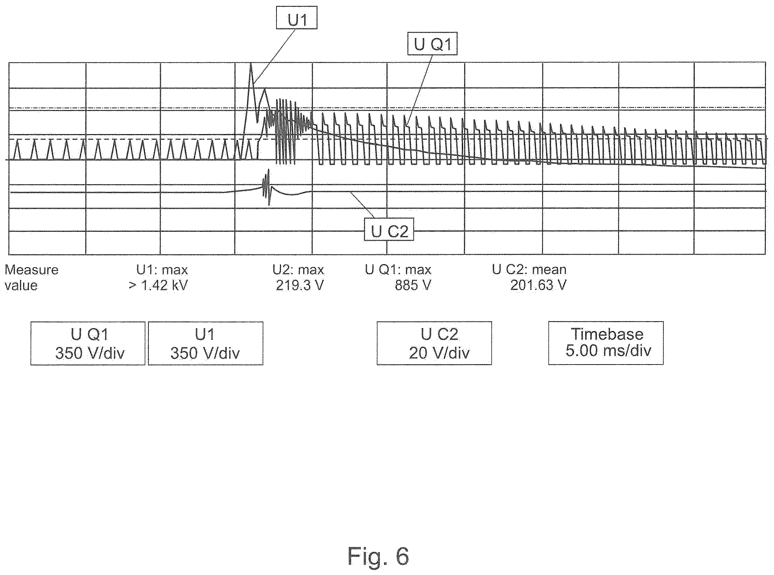

**Fig. 6** zeigt ein Oszillogramm eines Überspannungspulses von 1,4 bis 1,5 kV am Eingang U1 bei der erfindungsgemäßen Schaltung gemäß **Fig. 5****.** Es ist gut zu sehen, dass die maximale Spannung am Wandlertransistor Q1 750 V beträgt. Die Energie des Überspannungspulses wird in den Speicherkondensator C2 abgeleitet. Dadurch ist an C2 eine kurzfristige Erhöhung der Spannung von 200V auf 220V zu sehen. Bei einer Durchbruchsspannung des Varistors R1 von 550V wird die Spannung an dem Wandlertransistor Q1 auf 750V, die Summe von 200V und 550V, begrenzt. Durch Schaltflanken werden lediglich kurzzeitig höhere Werte gemessen. Die Durchbruchspannung des Varistors muss so gewählt werden, dass die maximale Spannungsfestigkeit des Transistors Q1 nicht überschritten wird.

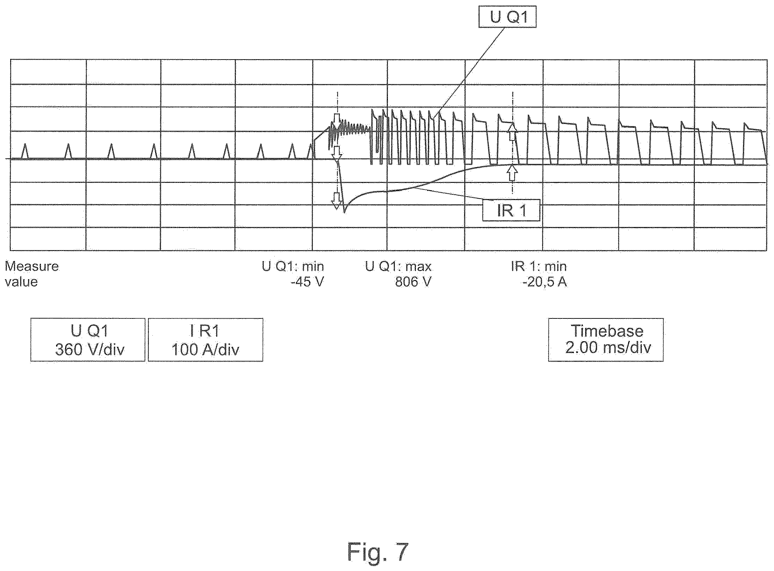

Fig. 7 zeigt ein Oszillogramm des Stroms durch den Varistor R1 bei obigem Überspannungspuls von 1,4 kV bis 1,5 kV. Durch den Varistor R1 fließt für 50µs ein Strom IR1 mit einem Spitzenwert von 20A.

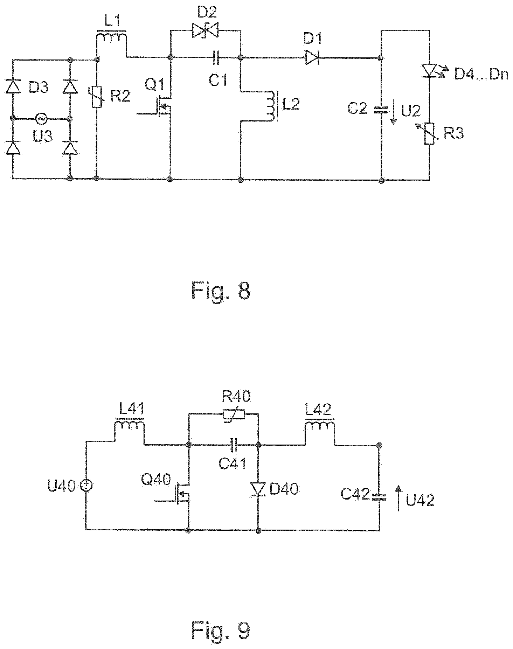

Fig. 8 zeigt ein Ausführungsbeispiel des erfindungsgemäßen Gleichspannungswandlers als elektronisches Vorschaltgerät für LEDs mit einer TVS-Diode anstatt dem Varistor. Eine TVS Diode ist als spannungsabhängiges Schaltelement ebenfalls geeignet, den Schalttransistor vor Überspannung zu schützen. Im Prinzip kann hier jedes spannungsabhängige Element Verwendung finden, auch spannungsabhängige Schalter wie TVS-Dioden und Funkenstrecken sind geeignet, da die Elemente gegenüber dem Stand der Technik insgesamt weniger Energie aufnehmen müssen, da sie an den Speicherkondensator weitergeleitet wird. Das Diodenarray S3 ist als Brückengleichrichter geschaltet, der die Eingangswechselspannung U3 in eine pulsierende Gleichspannung umwandelt. Der Eingang des SEPIC-Gleichspannungswandlers wird hier zusätzlich noch von einem Varistor geschützt, der schon viel von einem auftretenden Überspannungspuls kompensieren kann. Der SEPIC-Wandler aus den Bauteilen L1, Q1, dem Wandlerkondensator C1, L2, D1 und dem Speicherkondensator C2 ist bekannt. Parallel zum Speicherkondensator C2 ist eine Serienschaltung mehrerer LEDs D4 bis Dn angeschlossen. Seriell zu den LEDs ist ein variabler Widerstand zur Strombegrenzung geschaltet. Dieser kann z. B. als ein Linearregler realisiert werden. Parallel zum Wandlerkondensator C1 ist erfindungsgemäß eine TVS Diode D2 geschaltet. Baut sich am Knotenpunkt zwischen dem Wandlertransistor Q1 und der Wandlerdiode D2 eine Spannung auf, die die TVS Diode zum Durchbrechen bringt, so kann der Überspannungsimpuls über die Wandlerdiode D1 in den Speicherkondensator C2 abfließen.

Dadurch wird der Wandlertransistor Q1 wirksam geschützt.

Bei Betrieb an einem 230V Wechselspannungsnetz eignet sich die Schaltung insbesondere für Ausgangsspannungen U2 zwischen 0 bis 300V. Bei höheren Ausgangsspannungen liegt die Begrenzungsspannung am Mos-FET Q1 über dem Bereich der üblichen Spannungsfestigkeit von 600V bis 800V.

Fig. 9 zeigt beispielhaft den Einsatz des erfindungsgemäß verschalteten Varistors in einem Cuk-Wandler. Dieser zeichnet sich gegenüber einem SEPIC-Wandler dadurch aus, dass die zweite Drossel L2 beziehungsweise L42 und die Wandlerdiode D1 beziehungsweise D40 vertauscht sind.

Der erfindungsgemäß parallel zum Wandlerkondensator C41 verschaltete Varistor R40 wird bei einem Überspannungspuls ab seiner Schwellenspannung niederohmig und leitet die Energie des Überspannungspulses über die Wandlerdiode D40 direkt auf Masse ab.

### Bezugszeichenliste

- U1: Eingangsspannung
- R2: Varistor am Eingang
- R1: Varistor in der erfindungsgemäßen Verschaltung
- C1, C41: Wandlerkondensator
- Q1, Q40: Wandlertransistor
- D1, D40: Wandlerdiode
- L1, L41: erste Wandlerdrossel
- L2, L42: zweite Wandlerdrossel
- C2, C42: Speicherkondensator

## Patentansprüche

1. Überspannungsgeschützte Schaltungsanordnung zum Wandeln von Spannungen, aufweisend einen Gleichspannungswandler mit einem im aktiven Wandlerstrompfad befindlichem Wandlertransistor (Q1) und einem Wandlerkondensator (C1), **dadurch gekennzeichnet, dass** parallel zum Wandlerkondensator (C1) zum Schutz des Wandlertransistors ein spannungsabhängiges Element (R1, D2) geschaltet ist, und der Gleichspannungswandler ein SEPIC-Wandler oder ein Cuk-Wandler ist.

2. Schaltungsanordnung gemäß Anspruch 1, **dadurch gekennzeichnet, dass** das spannungsabhängige Element ein Varistor ist

3. Schaltungsanordnung gemäß Anspruch 1, **dadurch gekennzeichnet, dass** das spannungsabhängige Element eine TVS-Diode ist.

4. Schaltungsanordnung gemäß Anspruch 1, **dadurch gekennzeichnet, dass** das spannungsabhängige Element eine Funkenstrecke ist

5. Schaltungsanordnung gemäß einem der vorhergehenden Ansprüche, wobei in den Gleichspannungswandler eine Eingangsspannung (U1) eingebbar ist, und der Gleichspannungswandler eingerichtet ist eine Ausgangsspannung (U2) auszugeben, **dadurch gekennzeichnet, dass** die Ausgangsspannung (U2) kleiner ist als die Eingangsspannung (U1).

## Claims

1. Overvoltage-protected circuit arrangement for converting voltages, having a DC voltage converter with a converter transistor (Q1) located in the active converter current path and a converter capacitor (C1), **characterized in that** a voltage-dependent element (R1, D2) is connected in parallel with the converter capacitor (C1) to protect the converter transistor, and the DC voltage converter is a SEPIC converter or a Cuk converter.

2. Circuit arrangement according to Claim 1, **characterized in that** the voltage-dependent element is a varistor.

3. Circuit arrangement according to Claim 1, **characterized in that** the voltage-dependent element is a TVS diode.

4. Circuit arrangement according to Claim 1, **characterized in that** the voltage-dependent element is a spark gap.

5. Circuit arrangement according to one of the preceding claims, wherein an input voltage (U1) is able to be input into the DC voltage converter, and the DC voltage converter is configured to output an output voltage (U2), **characterized in that** the output voltage (U2) is lower than the input voltage (U1) .

## Revendications

1. Agencement de circuit protégé contre les surtensions destiné à convertir des tensions, comprenant un convertisseur de tension continue-continue comportant un transistor de conversion (Q1) se trouvant dans un trajet de courant actif du convertisseur et un condensateur de conversion (C1),
**caractérisé en ce qu'**un élément dépendant de la tension (R1, D2) est connecté en parallèle au condensateur de conversion (C1) pour protéger le transistor de conversion, et le convertisseur de tension continue-continue est un convertisseur SEPIC ou un convertisseur Cuk.

2. Agencement de circuit selon la revendication 1, **caractérisé en ce que** l'élément dépendant de la tension est une varistance.

3. Agencement de circuit selon la revendication 1, **caractérisé en ce que** l'élément dépendant de la tension est une diode TVS.

4. Agencement de circuit selon la revendication 1, **caractérisé en ce que** l'élément dépendant de la tension est un éclateur.

5. Agencement de circuit selon l'une des revendications précédentes, dans lequel une tension d'entrée (U1) peut être introduite dans le convertisseur de tension continue-continue, et le convertisseur de tension continue-continue est configuré pour délivrer une tension de sortie (U2), **caractérisé en ce que** la tension de sortie (U2) est inférieure à la tension d'entrée (U1).
